# EUROPEAN PATENT SPECIFICATION

(11) **EP 1 467 614 B1**
(45) Date of publication and mention of the grant of the patent: **24.12.2008**
(21) Application number: 03729542.5
(22) Date of filing: 03.01.2003
(51) Int. Cl.: A01K 61/00, A22C 25/04, B07C 5/06

(54) **APPARATUS FOR GRADING LIVE FISH AND THE LIKE**
GERÄT FÜR DIE SORTIERUNG VON LEBENDEN FISCHEN UND DERGLEICHEN
DISPOSITIF DE TRIAGE DE POISSONS VIVANTS ET ANALOGUES

(30) Priority: 03.01.2002 IS 621602
(43) Date of publication of application: 20.10.2004
(73) Proprietor: Steinsson, Steinar, 200 Kopavogur (IS)
(72) Inventor: Steinsson, Steinar, 200 Kopavogur (IS)
(74) Representative: Hardarson, Gunnar Örn
(86) International application number: PCT/IS2003/000001
(87) International publication number: WO 2003/059052

(56) References cited:
- FR-A- 975 679
- GB-A- 1 579 719
- NO-C- 75 934
- US-A- 1 649 304

## Description

The invention concerns a method and equipment for grading according to thickness sensitive objects, particularly live fish, smolt and fry, but also other organic and non organic material, which may involve more gentle and accurate treatment.

The machinery and equipment involved is based on the assessment of the thickness of the objects, and is unique in that processing is based on specially-designed box equipment, which preferably holds and moves the objects forwards without shaking them or rubbing their surface in the course of grading. The equipment includes special boxes with one movable side, adjustment device, drive equipment, infeed equipment and the co-ordination of functioning of all these elements in order to achieve the desired aims.

Many types and versions of grading machines for fish and other materials are known which grade the items according to an assessment of their thickness. These include machines with belts or rollers and shaker-graders with several grading channels. Ridge-belt machines also have several grading channels formed of ridgebelt. All the machines have grading channels that are wider at the outlet than at the intake. The belt machine draws the objects forward between two inclined belts which form the channel. The roller machines include two rollers which turn, the items being moved slowly past the rollers by means of friction between the rollers and the objects. The shaker-grader consists of ridges which form gaps, the objects are moved forward between the ridges by shaking. The ridge-belts machine has belts which move the object as a belt conveyor when the gap increases the object falls through.
One type of machine which involves a rotating table is a vaccination apparatus, United States Patent 5,215,035. On the table are mounted some holders for the fish to be vaccinated. The machine has a basin where fish are placed under an anaesthetic to make it easy to manually transfer them from the basin in to the machine. If the fish is non-breeding the operator can pus a contact on the machine which then will direct the fish to a different outlet.
In addition to the aforementioned grading machines, there are machines which operate in accordance with different principles and are fitted with electronic scales or imaging sensors.

An aim is to provide a box-grading-machine which treats the items to be graded gently, is accurate for living fish, smolt, fry and other organic material and is also able to grade non organic material and is constructed so that it is compact and does not need much working area, is relatively inexpensive and requires little maintenance.

The present invention provides an apparatus for grading sensitive products such as living fish, smolt and fry, comprising an infeed device, boxes for moving and grading the products and devices to control the grading slot, each box is made up of two parts a support-part and an adjustable part, the support-part has one side and two end plates which are bolted to the rotation table and rotate with the central shaft, the adjustable part is a second side of the box and hangs on a pin which is placed in bearings on the support-part of the box and on the end of the pin is a lever arm which is in contact with an adjusting device, the width of the grading slot is controlled by several adjustable guide ways, one guide way for every outlet from the grader when the guide way is lifted the grading slot gets narrower. when the guide way is lowered the width of the grading slot increases.

The infeed device utilizes the natural behaviour of live fish on flat plate which cause the fish to glide on the sloping bottom plate to the slots. The first slot is to ensure that only single layer of fish will be in the spreader part of the in feeding device, the second slot control the flow of fish and orients the fish in a position which is suitable for good grading. The first part og the infeeding device is a receiver with slightly sloping bottom so the fish glide to the first control slot and further to the second slot in the feeding spreader which places the fish in the correct position for grading and in the grading boxes. The fish is lifted up to the receiver either with a dipnet or by pumping.

The machine has a revolving plane to which the grading boxes are fastened and rotate with the central shaft. The outlets are placed in the machine frame under the revolving plane. When the material is to be graded in a few sizes only for instance four sorts the outlets from only half of the machine are needed and then is possible to infeed on two places at the same time and increase the throughput of the machine.

Preferred embodiments of the invention will now be described, by way of example only, and with reference to the accompanying drawings in which:

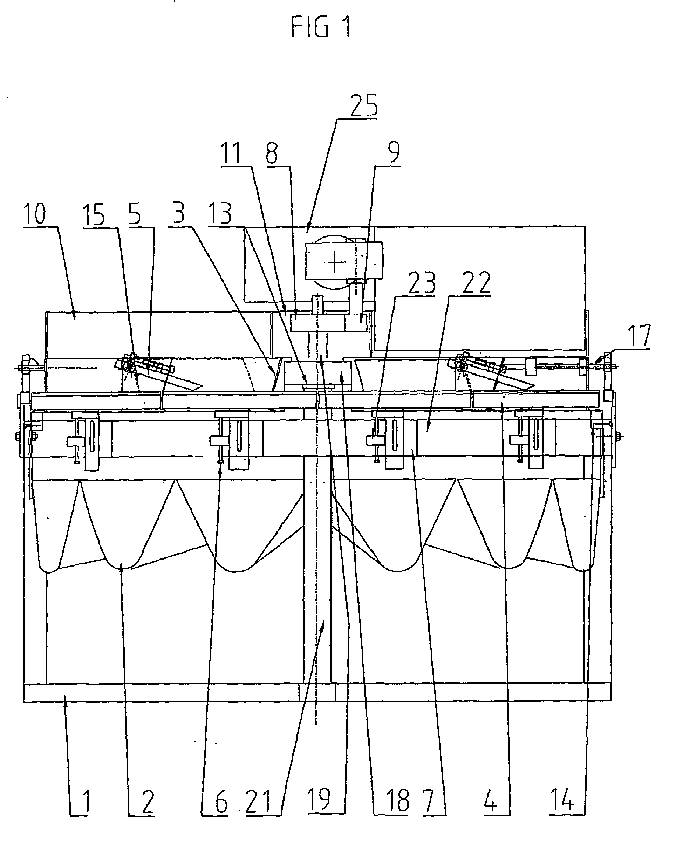

Figure 1 - shows a side view of the equipment designed for grading of live fish, smolt, fry and other objects.

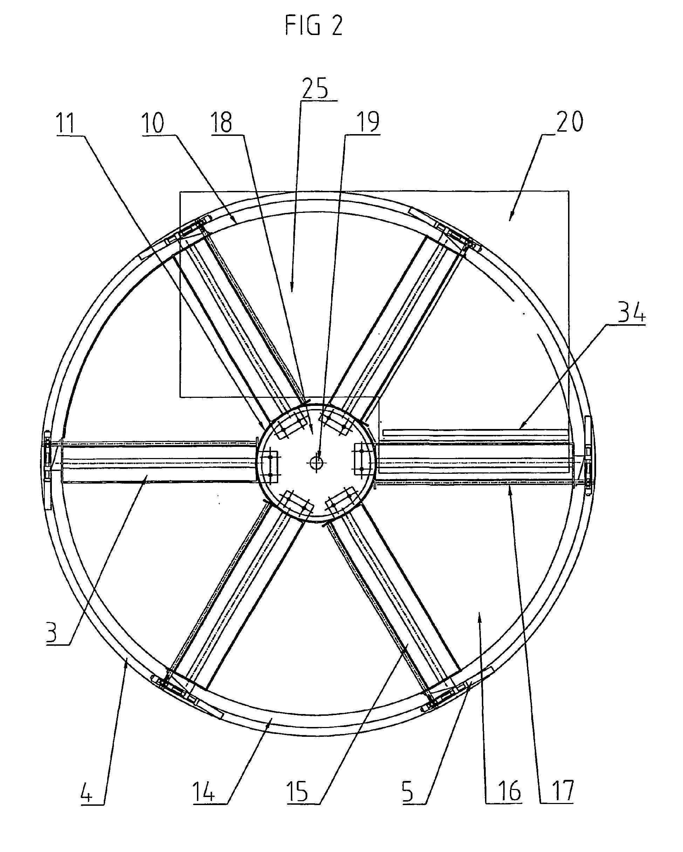

Figure 2 - shows a top view of the equipment.

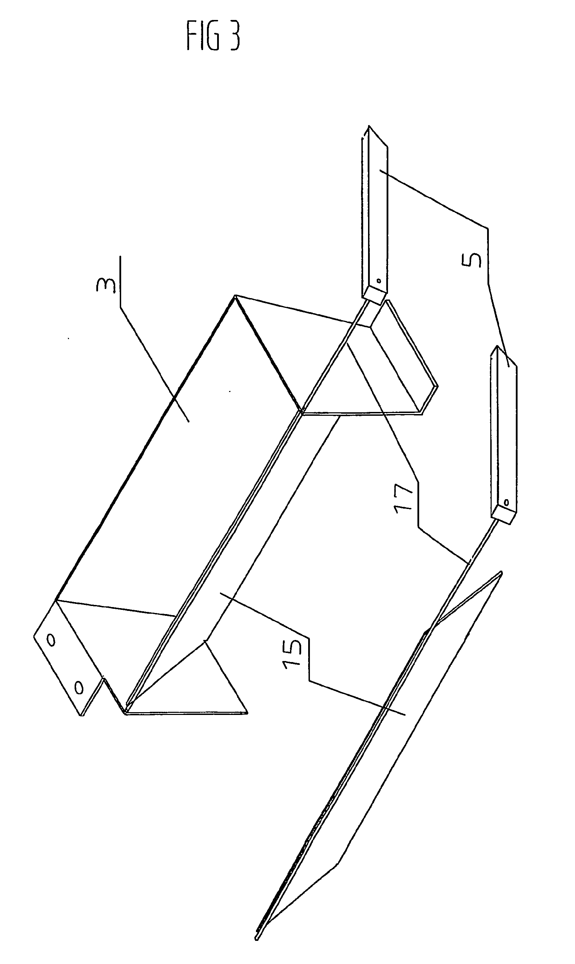

Figure 3 - shows a grading box with movable side.

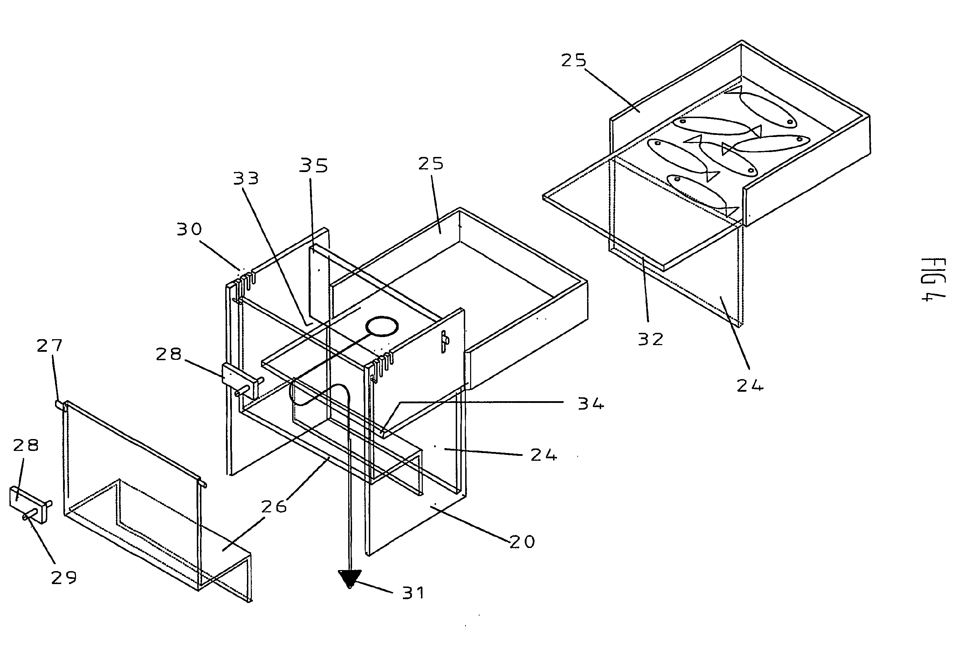

Figure 4 - shows a infeeding device.

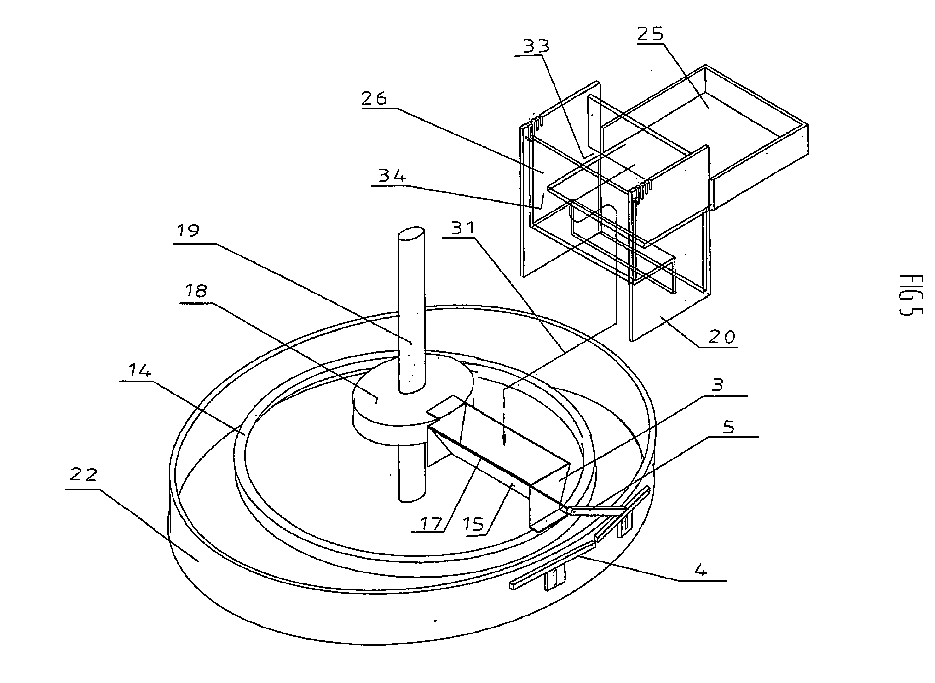

Figure 5 - shows an overview drawing which elaborates on how the different devices work together.

### Figure 1

Shows a side-view of the machine. The machine is build on a machine frame (1). In the centre of the frame is pilar bracket (21) and on the top of the pilar is a bearing (13) for the supporting axle (19) and the bracket plate (18), the grading boxes (3) are bolted to the bracket plate and rotate with it. On the top of the supporting axle is a gear wheel (8) which is driven by a motor and pinion wheel (9)
The material to be graded is lifted up to the infeeder device (25) and glides through the first slot (24) to the spreader and falls through the second slot (20) to the grading box (3) in a suitable quantity. The adjusting arm (5) is fastened to a pivot (17) which is joined to the movable side (15) of the grading box (3) the adjusting arm (5) glides on an adjusting rim (4), the width of the grading gap depends on how high the adjusting rim is placed, the adjusting rim is moved up or down by the adjusting screw (6) which is placed in a bracket (23) on the bracket holder (22). Every outlet from the machine has it own adjusting rim which controls the size of the outgoing material, the graded material falls through the gap in the grading box and down a chute (2) to a suitable container.

### Figure 2

Shows a top-view of the machine. The items (20), (24) and (25) are on a higher level than the other parts of the drawing. In the middle is the driving shaft (19), the bracket plate (18) is fastened to the shaft and the rotating table (16) and the grading boxes (3) are bolted to the bracket plate. The opposite end of the grading boxes slides on a bearing surface (14). The adjustable side (15) of the grading box is affixed to the pin (17) and the adjusting arm (5) which slides on the adjusting rim (4). Plates (16) cover the gaps between the grading boxes and make up the bottom in the movable part of the machine which is surrounded by bulwarks on the outer side (10) and on the inner side (11).

### Figure 3

Shows a grading box and the box parts. The fixed part (3) is bolted to the rotating part of the machine, the movable side (15) is connected to the fixed part through the pivot (17). At the bottom of the grading box is a gap where the material falls through and is sorted by size depending on how wide the gap is. The adjusting arm (5) controls the size of the gap when the arm is lifted or lowered the movable side (15) is turned about the pivot (17)

### Figure 4.

Shows a in feeding device which are made from three main parts of which the first is the infeeding receiver (25) with sloping bottom (32) so the fish glide to the slot (33) because of the ordinary movement of live fish. The second main part is the spreader and flow control (20). Between the receiver and the spreader is a control plate (35) which adjust the slot (33) The third main part is the flow control board (26). Between the flow control board and one end of the bottom plate (32) is an adjustable slot (34). The flow control board (34) hangs on taps (27) in slots (30) thus making it possible to control the width of the slot (34) and the width of the canal which leads to the grading box. With use of the adjusting screw (29) and the braced (28) the slot (34) can be finely adjusted. The arrow (31) shows the way the fish glide from the receiver to the grading box. The plate (24) prevent the fish from moving in the wrong direction on the rotating table.

### Figure 5

This picture details the workings of the grading system. The grading box (3) and the adjustable box side (15) are the part of the machine where the grading is done. The material is brought into the infeeder (25) and glides trough a slot (33) to the spreader and falls through second slot (34) down to the grading boxes (3). The flow is adjusted with the control panel (26) and the control slots (30) where the control panel is placed. The arrow shows the way the material flows. The movable box side is connected to the pivot (17) which is fastened to an adjusting arm (5). The adjusting arm glides on an adjusting rim (4) and regulates the grading slot at the bottom of the grading box. When the adjusting rim (4) is lifted, the slot narrows, but if the adjusting rim is lowered the slot width increases. The grading boxes are bolted to a bracket dish (18) which rotates together with a central shaft (19).

## Claims

1. An apparatus for grading sensitive products such as living fish, smolt and fry, comprising:
one or more in-feed devices (25);
a water supply for providing a water flow with the products through the apparatus;
a drive mechanism (9) for providing rotary motion within the apparatus; and
a revolving plane (16) with attached grading boxes (3) for receiving the products from said one or more in-feed devices, said revolving plane being provided with outgoing channels (2) there below,
wherein the graded products are released through the bottom of the grading boxes to the outgoing channels (2) positioned underneath the revolving plane, said outgoing channels (2) being fastened to the machine frame (1).
**characterised in that**
one of the sides (15) of said grading boxes is adjustable and forms a grading gap in the bottom of said boxes, said gap being controlled by a lever arm (5), said arm being operative to glide on a piecewise adjustable grading rim (4) which controls the grading gap;
the grading rim is attached to a bracket holder (22) forming an assembly which surrounds the revolving plane and is fastened to a machine frame (1); and
the position of each piece of the grading rim (4) is adjusted to control the gap in the bottom of the grading boxes;

2. An apparatus according to claim 1, wherein at least one of said one or more infeed devices comprises:
a receiver (25) with a slightly sloping flat bottom (32); and
an adjustable slot (33) for controlling that only a single layer of fish is fed to a spreader part provided with an associated adjuster board (35); and
a second slot (34) which regulates the flow of fish and is controlled by a control board (26) which is also operable to bring the fish into a favorable grading position.

3. An apparatus according to claim 1 or 2 wherein the grading device comprises:
a revolving plane, rotating the grading boxes (3) around a central shaft (19); and
a stationary frame with an adjustable piecewise grading rim;
wherein each piece of the grading rim is adjustable and the grading rim adjusts the gap in the bottom of the grading boxes so the products in the boxes fall out into corresponding selected outgoing channels (2).

4. An apparatus according to any one of claims 1 to 3, wherein grading of the products is carried out in boxes (3), which are attached to the revolving plane with one side (15) of every box movable for varying the width of the slot at the bottom of each box (3), wherein the top edge of the movable side (15) is fastened to a pivot (17) with a lever arm (5), and wherein an end of said lever arm (5) glides on the grading rim thereby controlling the width of the grading gap.

5. An apparatus according to any one of claims 1 to 4 wherein said grading device comprises:
a piecewise adjustable grading rim assembly surrounding the revolving plane, said assembly being arranged to operate the grading slot at the bottom of the grading boxes by means of the lever arm (5) gliding on the piecewise adjustable grading rim (4)
wherein the piecewise adjustable grading rim controls the size of the products directed to each of the outgoing channels (2), the pieces of the grading rim (4) being set in position with adjusting screws (6) which are fastened to the surrounding bracket holder (22).

## Patentansprüche

1. Gerät zum Sortieren empfindlicher Produkte, wie zum Beispiel lebender Fisch, Sälmling und Laich, Folgendes umfassend:
ein oder mehrere Zubringervorrichtungen (25);
eine Wasserversorgung zum Bereitstellen eines Wasserflusses mit den Produkten durch das Gerät;
einen Antriebsmechanismus (9) zum Bereitstellen einer Drehbewegung innerhalb des Geräts, und
eine Drehebene (16) mit befestigten Sortierboxen (3) zum Aufnehmen der Produkte von der einen oder den mehreren Zubringervorrichtungen wobei die Drehebene unterhalb mit herausführenden Kanälen (2) versehen ist,
wobei die sortierten Produkte durch den Boden der Sortierboxen zu den herausführenden Kanälen (2), die unter der Drehebene positioniert sind, freigegeben werden, wobei die herausführenden Kanäle (2) an dem Maschinenrahmen (1) befestigt sind,
**dadurch gekennzeichnet,**
**dass** eine der Seiten (15) der Sortierboxen einstellbar ist und eine Sortierspalte in dem Boden der Boxen bildet, wobei die Spalte von einem Hebelarm (5) gesteuert wird, wobei der Arm betätigt werden kann, um auf einem stückweisen einstellbaren Sortierrand (4), der die Sortierspalte steuert, zu gleiten;
wobei der Sortierrand an einem Trägerhalter (22) befestigt ist, der eine Einheit bildet, die die Drehebene umgibt und an einem Maschinenrahmen (1) befestigt ist, und
**dass** die Position jedes Teils des Sortierrands (4) eingestellt ist, um die Spalte in dem Boden der Sortierboxen zu steuern.

2. Gerät nach Anspruch 1, wobei mindestens eine der einen oder mehreren Zubringervorrichtungen Folgendes aufweist:
einen Aufnehmer (25) mit einem leicht geneigten flachen Boden (32) und einen einstellbaren Schlitz (33), um zu kontrollieren, dass nur eine einzige Lage von Fischen zu einem Ausbreiterteil, der mit einem dazugehörenden Einstellbrett (35) versehen ist, geführt wird, und
einen zweiten Schlitz (34), der den Fischfluss reguliert und von einem Steuerbrett (26) gesteuert wird, das auch bedient werden kann, um die Fische in eine günstige Sortierposition zu bringen.

3. Gerät nach Anspruch 1 oder 2, wobei die Sortiervorrichtung Folgendes aufweist:
eine Drehebene, die die Sortierboxen (3) um eine zentrale Welle (19) dreht, und
einen feststehenden Rahmen mit einem einstellbaren stückweisen Sortierrand;
wobei jeder Teil des Sortierrands einstellbar ist und der Einstellrand die Spalte in dem Boden der Sortierboxen derart anpasst, dass die Produkte in den Boxen daraus in entsprechende ausgewählte herausführende Kanäle (2) fallen.

4. Gerät nach einem der Ansprüche 1 bis 3, wobei das Sortieren der Produkte in Boxen (3), die an der Drehebene befestigt sind, ausgeführt wird, wobei eine Seite (15) jeder Box zum Variieren der Breite des Schlitzes am Boden jeder Box (3) beweglich ist, wobei die Oberkante der beweglichen Seite (15) an einem Zapfen (17) mit einem Hebelarm (5) befestigt ist, und wobei ein Ende des Hebelarms (5) auf dem Sortierrand gleitet und **dadurch** die Breite der Sortierspalte steuert.

5. Gerät nach einem der Ansprüche 1 bis 4, wobei die Sortiervorrichtung Folgendes aufweist:
einen stückweise einstellbaren Sortierrandaufbau, der die Drehebene umgibt, wobei der Aufbau eingerichtet ist, um den Sortierschlitz am Boden der Sortierboxen durch einen Hebelarm (5), der auf dem stückweisen einstellbaren Sortierrand (4) gleitet, zu betreiben,
wobei der stückweise anpassbare Sortierrand die Größe der Produkte steuert, die zu jedem der herausführenden Kanäle (2) gelenkt werden, wobei die Teile des Sortierrands (4) mit Einstellschrauben (6), die auf dem umgebenden Trägerhalter (22) befestigt sind, eingestellt werden.

## Revendications

1. Appareil pour trier des produits sensibles comme des poissons vivants, des saumoneaux et des alevins, comprenant :
un ou plusieurs dispositifs d'alimentation (25) ;
une alimentation en eau pour fournir un flux d'eau avec les produits au travers de l'appareil ;
un mécanisme d'entraînement (9) pour fournir un mouvement rotatif à l'intérieur de l'appareil ; et
un plan rotatif (16) auquel sont fixés des caissettes de triage (3) pour recevoir les produits provenant du ou des dispositifs d'alimentation, ledit plan rotatif étant pourvu de canaux sortants (2) par-dessous,
dans lequel les produits triés sont relâchés à travers le fond des caissettes de triage vers les canaux sortants (2) positionnés en dessous du plan rotatif, lesdits canaux sortants (2) étant fixés au châssis de la machine (1),
**caractérisé en ce que**
un des côtés (15) desdites caissettes de triages est réglable et forme un écartement de triage dans le fond desdites caissettes, ledit écartement étant commandé par un bras de levier (5), ledit bras étant opérationnel afin de glisser sur une jante de triage (4) réglable pièce par pièce qui commande l'écartement de triage ;
la jante de triage est fixée à un support (22) formant un ensemble qui entoure le plan rotatif et est fixé sur un châssis de machine (1) ; et
la position de chaque pièce de la jante de triage (4) est réglée afin de commander l'écartement dans le fond des caissettes de triage.

2. Appareil selon la revendication 1, dans lequel au moins un desdits un ou plusieurs dispositifs d'alimentation comprend :
un récepteur (25) avec un fond plat (32) légèrement incliné ; et
une fente réglable (33) pour commander que seule une couche unique de poisson soit alimentée dans une partie d'épandeur pourvue d'un panneau ajusteur associé (35) ; et
une seconde fente (34) qui régule l'écoulement du poisson et est commandée par un panneau de commande (26) qui est aussi mis en fonctionnement afin d'amener le poisson en une position de triage favorable.

3. Appareil selon la revendication 1 ou 2, dans lequel le dispositif de triage comprend :
un plan rotatif, entraînant en rotation les caissettes de triage (3) autour d'un arbre central (19) ; et
un châssis rotatif avec une jante de triage réglable pièce par pièce ;
dans lequel chaque pièce de la jante de triage est réglable et la jante de triage règle l'écartement dans le fond des caissettes de triage de sorte que les produits dans les caissettes tombent dans les canaux sortants (2) sélectionnés correspondants.

4. Appareil selon une quelconque des revendications 1 à 3, dans lequel le triage des produits est effectué dans des caissettes (3), qui sont fixées au plan rotatif par un côté (15) de chaque caissette déplaçable afin de varier la largeur de l'encoche au fond de chaque caissette (3), dans lequel le bord supérieur du côté déplaçable (15) est fixé à un pivot (17) avec un bras de levier (5), et dans lequel une extrémité dudit bras de levier (5) coulisse sur la jante de triage en commandant ainsi la largeur de l'écartement de triage.

5. Appareil selon une quelconque des revendications 1 à 4, dans lequel ledit dispositif de triage comprend :
un ensemble de jante de triage réglable pièce par pièce entourant le plan rotatif, ledit ensemble étant agencé afin de faire fonctionner l'encoche de triage au fond des caissettes de triage au moyen du bras de levier (5) coulissant sur la jante de triage (4) réglable pièce par pièce,
dans lequel la jante de triage réglable pièce par pièce commande la taille des produits dirigés vers chacun des canaux sortants (2), les pièces de la jante de triage (4) étant réglées en position avec des vis d'ajustement (6) qui sont fixées au support (22) entourant.
